# EUROPEAN PATENT APPLICATION

(11) **EP 4 303 543 A1**
(43) Date of publication of application: **10.01.2024**
(21) Application number: 22763035.7
(22) Date of filing: 21.02.2022
(51) Int. Cl.: G01G 3/142, G01L 1/22

(54) **LOAD CELL, SCALE, AND STRAIN SENSOR**

(30) Priority: 01.03.2021 JP 2021032127
(71) Applicant: Tanita Corporation, Tokyo 174-8630 (JP)
(72) Inventor: ICHIHARA, Seiya, Tokyo 174-8630 (JP); YAMADA, Hiroyuki, Aza-Shimotamogizoe, Horiminai, Daisen-shi, Akita 014-0113 (JP)
(74) Representative: Barker Brettell LLP
(86) International application number: PCT/JP2022/007052
(87) International publication number: WO 2022/185979

(57) **Abstract**

The load cell includes a strain generating body having a strain generating part, the strain generating part being configured to connect a fixed portion and a load receiving portion, and the strain generating part being elastically deformed by displacement of the load receiving portion. The load cell includes: a first strain gauge arranged on a part of a front surface of the strain generating part in a vicinity of the fixed portion; a second strain gauge arranged on a part of the front surface of the strain generating part in a vicinity of the load receiving portion; and a third strain gauge arranged on a part of a back surface of the strain generating part in a vicinity of the load receiving portion. The load cell includes: a fourth strain gauge arranged on a part of the back surface of the strain generating part in a vicinity of the fixed portion; a first serial circuit in which the first strain gauge and the third strain gauge are connected in series; and a second serial circuit in which the second strain gauge and the fourth strain gauge are connected in series.

## Description

### TECHNICAL FIELD

The present invention relates to a load cell, a scale, and a strain sensor.

### BACKGROUND ART

JP2014-109438A discloses a measuring device using load cells. The measuring device is formed to have a flat shape.

The load cells each includes a strain generating body. The strain generating body is provided with a strain generating part between a fixed portion supported by a case base and a load receiving portion that supports a loading platform. The strain generating part is elastically deformed by displacement of the load receiving portion.

This strain generating part is provided with a plurality of strain gauges. The measuring device measures weight applied to the loading platform from measurement values acquired by the respective strain gauges.

### SUMMARY OF INVENTION

In a scale that is the above-described measuring device, in a case in which the scale is arranged in a cooled part or a warmed part or in a case in which the scale is held by a hand, errors occur in the measurement results of the strain gauges. The inventor found that this is due to the fact that external heat is transferred to the load cells via the case base or the loading platform, causing a temperature gradient in the strain generating part of the strain generating body.

This error becomes significantly pronounced when the strain generating body is made thinner, or the case base or the loading platform is made thinner in order to make the scale thinner.

The present invention has been conceived in light of the problems mentioned above, and an object thereof is to provide a load cell, a scale, and a strain sensor capable of suppressing influence on measurement results due to usage conditions.

A load cell of an aspect of the present invention includes a strain generating body having a strain generating part, the strain generating part being configured to connect a fixed portion and a load receiving portion, and the strain generating part being elastically deformed by displacement of the load receiving portion. The load cell includes: a first strain gauge arranged on a part of a front surface of the strain generating part in a vicinity of the fixed portion; a second strain gauge arranged on a part of the front surface of the strain generating part in a vicinity of the load receiving portion; and a third strain gauge arranged on a part of a back surface of the strain generating part in a vicinity of the load receiving portion. The load cell includes: a fourth strain gauge arranged on a part of the back surface of the strain generating part in a vicinity of the fixed portion; a first serial circuit in which the first strain gauge and the third strain gauge are connected in series; and a second serial circuit in which the second strain gauge and the fourth strain gauge are connected in series.

In the scale using the load cells of such an aspect, as an example, the heat applied from the case base to the fixed portion of the strain generating body is transferred to the load receiving portion via the strain generating part. In addition, as an example, the heat applied from the loading platform to the load receiving portion of the strain generating body is transferred to the fixed portion via the strain generating part. As a result, a temperature gradient is caused in the strain generating part of the strain generating body, and a temperature difference is caused between the part of the strain generating part in a vicinity of the fixed portion and the part of the strain generating part in a vicinity of the load receiving portion.

At the part of the strain generating part in a vicinity of the fixed portion, the first strain gauge is arranged on the front surface thereof, and the fourth strain gauge is arranged on the back surface thereof. In addition, at the part of the strain generating part in a vicinity of the load receiving portion, the second strain gauge is arranged on the front surface thereof, and the third strain gauge is arranged on the back surface thereof.

Here, in a case in which the scale is located at the warmed part, the heat applied from the case base to the fixed portion of the strain generating body is transferred to the load receiving portion via the strain generating part. As a result, the temperature of the parts where the first strain gauge and the fourth strain gauge are arranged becomes higher than the temperature of the parts where the second strain gauge and the third strain gauge are arranged.

Therefore, the influence of the heat transferred to the strain generating part on the measurement values of the first strain gauge and the fourth strain gauge is greater than the influence on the measurement values of the second strain gauge and the third strain gauge.

Because the first strain gauge, at which the temperature difference caused in the strain generating part has a large influence on the measurement value, and the third strain gauge, at which the temperature difference caused in the strain generating part has a small influence on the measurement value, form the first serial circuit, they are connected in series with each other.

In addition, the fourth strain gauge, at which the temperature difference caused in the strain generating part has a large influence on the measurement value, and the second strain gauge, at which the temperature difference caused in the strain generating part has a small influence on the measurement value, are connected in series in the second serial circuit. With such a configuration, in the first serial circuit and the second serial circuit, errors due to the thermal effects occur similarly in both circuits, and thereby, the errors in both circuits are averaged out.

Consequently, by employing the first serial circuit and the second serial circuit, it is possible to suppress the influence of the temperature gradient caused in the strain generating part on the measurement value. Therefore, it is possible to suppress the influence on the measurement results due to the usage conditions.

### BRIEF DESCRIPTION OF DRAWINGS

[FIG. 1] FIG. 1 is a perspective view showing a scale according to a first embodiment.
[FIG. 2] FIG. 2 is an exploded perspective view of the scale according to the first embodiment.
[FIG. 3] FIG. 3 is a plan view showing an inside of the scale according to the first embodiment.
[FIG. 4] FIG. 4 is an enlarged view of relevant portions showing a case base of the scale according to the first embodiment.
[FIG. 5] FIG. 5 is an enlarged view of relevant portions showing a state in which a load cell is attached to the case base of the scale according to the first embodiment.
[FIG. 6] FIG. 6 is an exploded perspective view showing the load cell according to the first embodiment.
[FIG. 7] FIG. 7 is a plan view showing the strain generating body of the load cell according to the first embodiment.
[FIG. 8] FIG. 8 is a sectional view taken along line A-A in FIG. 7.
[FIG. 9] FIG. 9 is an explanatory diagram showing a state in which a strain sensor according to the first embodiment is attached to the strain generating body and is a diagram showing an upper surface of the strain generating body on which a first end side of the strain sensor is arranged and a lower surface of the strain generating body on which a second end side of the strain sensor is arranged.
[FIG. 10] FIG. 10 is an explanatory diagram showing the strain sensor according to the first embodiment and circuits formed on the strain sensor.
[FIG. 11] FIG. 11 is a diagram showing a Wheatstone bridge circuit that is formed by connecting respective strain gauges of the respective load cells according to the first embodiment.
[FIG. 12] FIG. 12 is a diagram showing Wheatstone bridge circuit that is formed of the respective strain gauges of the strain sensor according to a second embodiment.

### DESCRIPTION OF EMBODIMENTS

In the following, respective embodiments will be described with reference to the attached drawings.

### < First Embodiment>

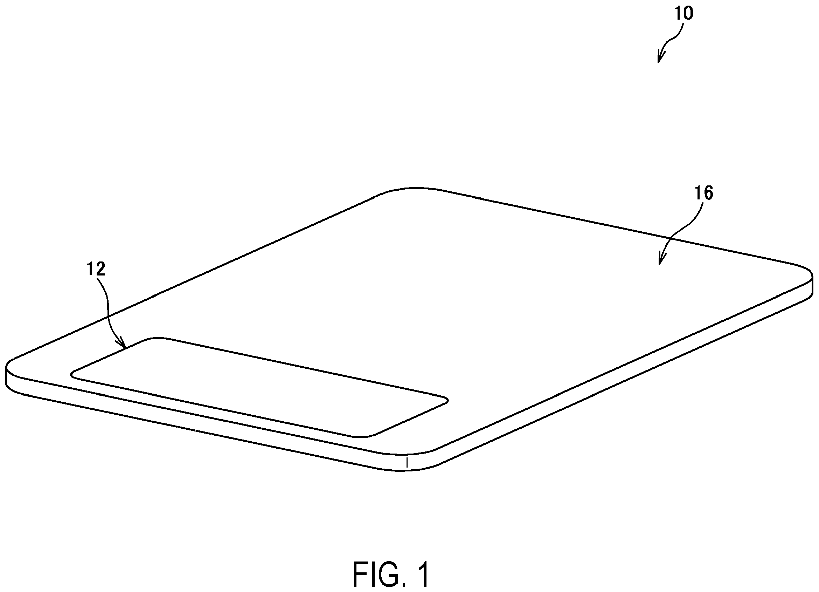

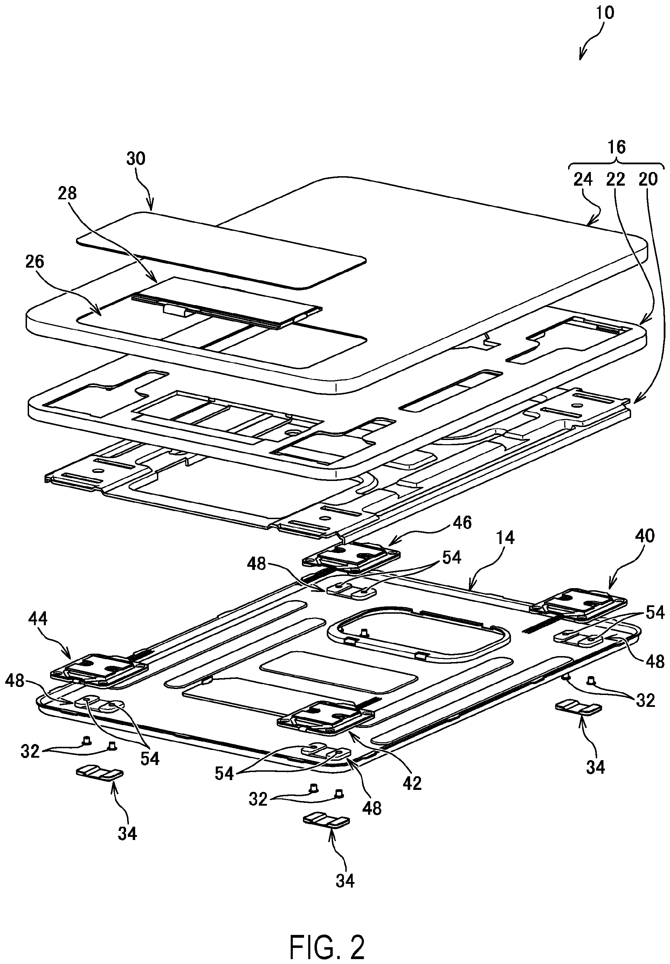

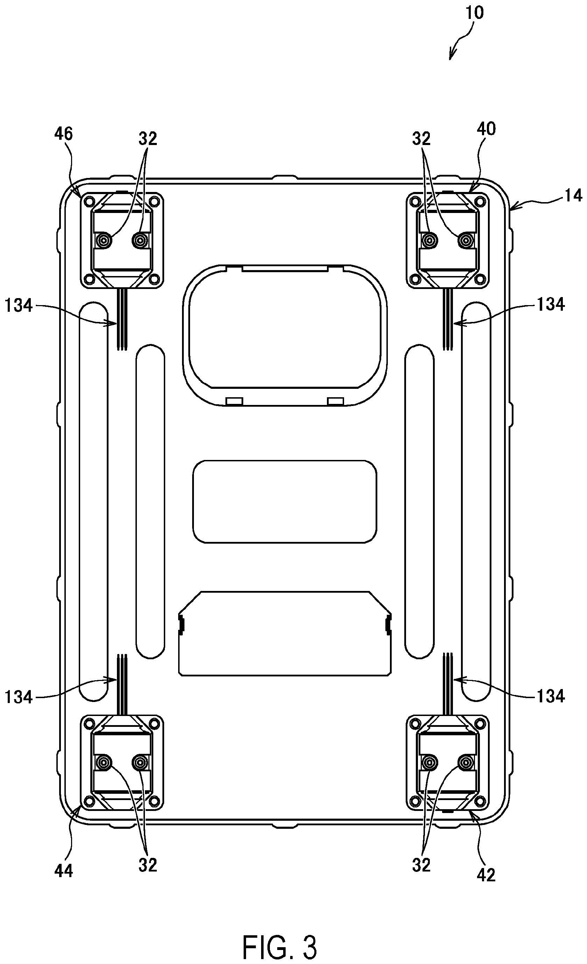

FIG. 1 is a perspective view showing a scale 10 according to a first embodiment. FIG. 2 is an exploded perspective view of the scale 10 according to the first embodiment. FIG. 3 is a plan view showing an inside of the scale 10 according to the first embodiment.

The scale 10 includes a weighing scale, a body scale, and a cooking scale, and the scale 10 in this embodiment forms the cooking scale used for measuring the weight of cooking ingredients.

As shown in FIG. 1, the scale 10 is formed to have a rectangular plate shape. A display 12 that displays measurement results is provided on the front side of the scale 10 in the longitudinal direction. In this embodiment, although a case in which the scale 10 has the rectangular shape will be described, the present invention is not limited thereto. For example, the scale 10 may have a square shape.

As shown in FIG. 2, the scale 10 is provided with a rectangular-shaped case base 14 and a loading platform 16 that can be moved up and down with respect to the case base 14. The scale 10 measures the weight of an object placed on the loading platform 16. The loading platform 16 is provided with a reinforcement plate 20 that is arranged above the case base 14, a resin cover 22 that is attached above the reinforcement plate 20, and a top cover 24 that covers an upper surface of the resin cover 22.

The front side of the top cover 24 is formed with an opening portion 26 having a rectangular shape. An indicator 28 is arranged inside the opening portion 26. The indicator 28 is formed of, as an example, a liquid crystal panel. The indicator 28 is covered by a transparent lens 30 that closes the opening portion 26.

Load cells (40, 42, 44, and 46) are provided between the case base 14 and the loading platform 16. The loading platform 16 is supported by the load cells (40, 42, 44, and 46) so as to be movable up and down with respect to the case base 14. The load cells (40, 42, 44, and 46) are each fixed to the case base 14 by fastening members 32 that are inserted through the case base 14. The fastening members 32 are concealed by rubber feet 34, which are attached to a lower surface of the case base 14.

As shown in FIG. 3, the load cell (40, 42, 44, 46) is arranged at four corners of the case base 14. The load cell (40, 42, 44, 46) is formed of a first load cell 40, a second load cell 42, a third load cell 44, and a fourth load cell 46. With such a configuration, the loading platform 16 formed to have a rectangular shape is supported by the respective the load cells 40, 42, 44, and 46 at the four corners.

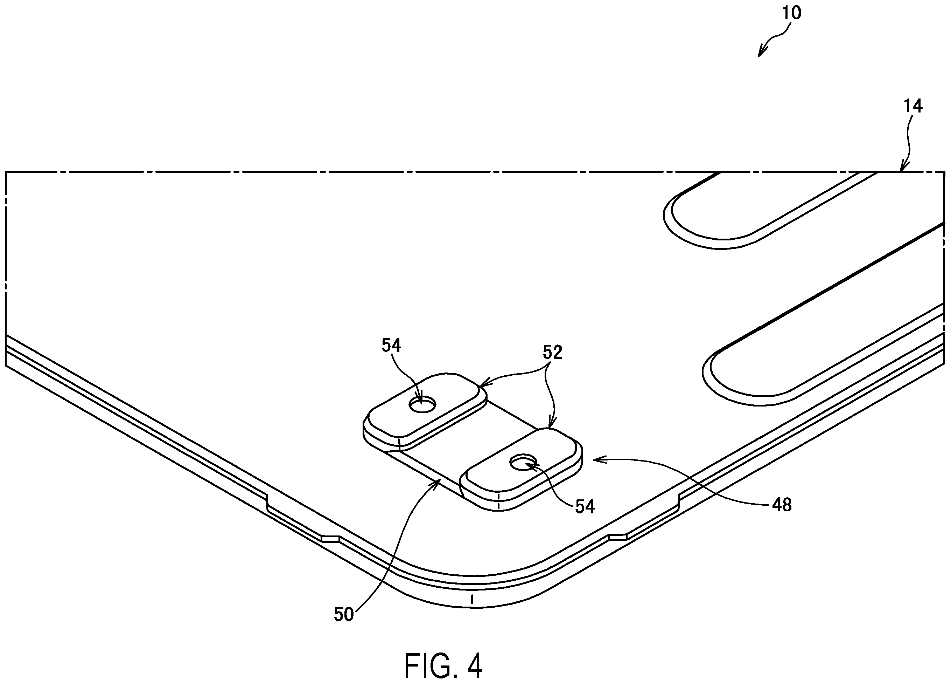

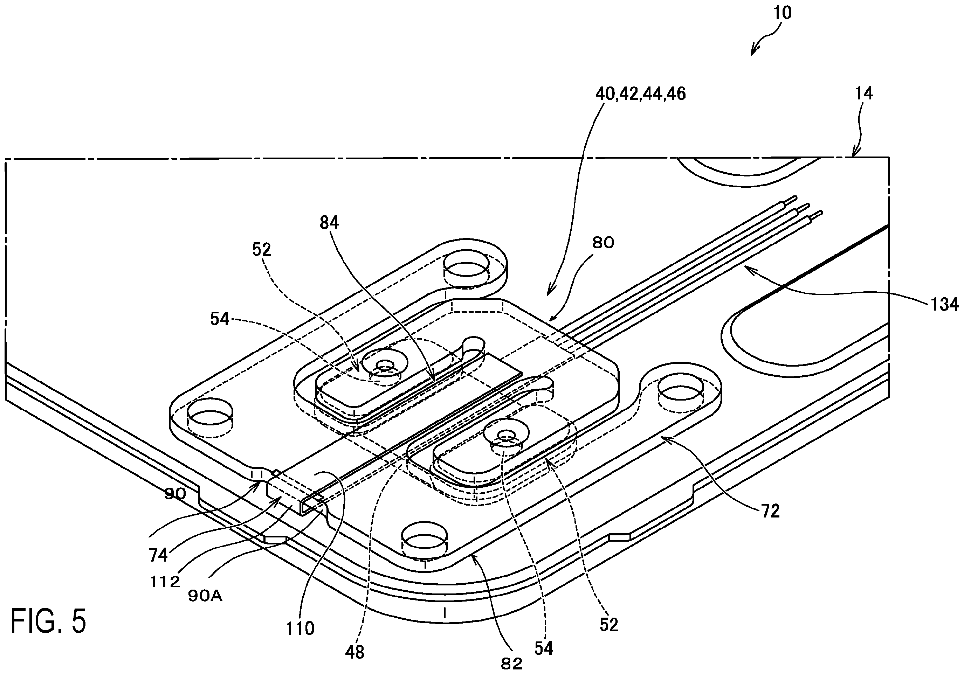

FIG. 4 is an enlarged view of relevant portions showing the case base 14 of the scale 10 according to the first embodiment. FIG. 5 is an enlarged view of relevant portions showing a state in which the load cell (40, 42, 44, 46) is attached to the case base 14 of the scale 10 according to the first embodiment.

As shown in FIG. 4, foundation portions 48 are respectively provided on parts of the case base 14 at which the load cells 40, 42, 44, and 46 are respectively arranged. The foundation portions 48 each has a base portion 50 that projects in a rectangular shape and protruding portions 52 that protrude on both end portions of the base portion 50, and each of the protruding portions 52 is formed with an insertion hole 54 through which each fastening member 32 is inserted.

As shown in FIG. 5, the load cell (40, 42, 44, 46) is correspondingly arranged on the foundation portion 48. The respective load cells 40, 42, 44, and 46, which are arranged on the foundation portions 48, are fixed to the case base 14 by the fastening members 32 respectively inserted through the insertion holes 54 of the protruding portions 52 formed on the foundation portions 48 (see FIG. 3).

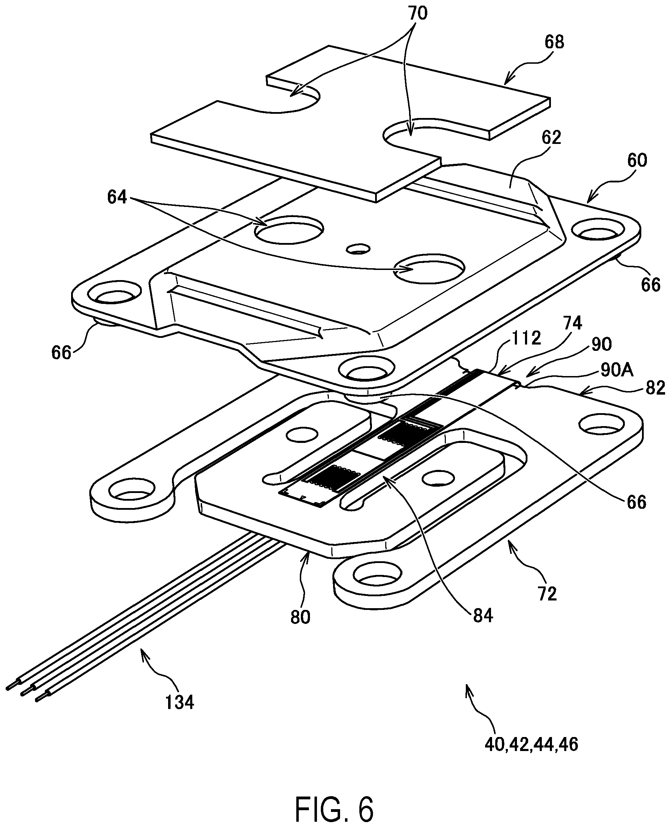

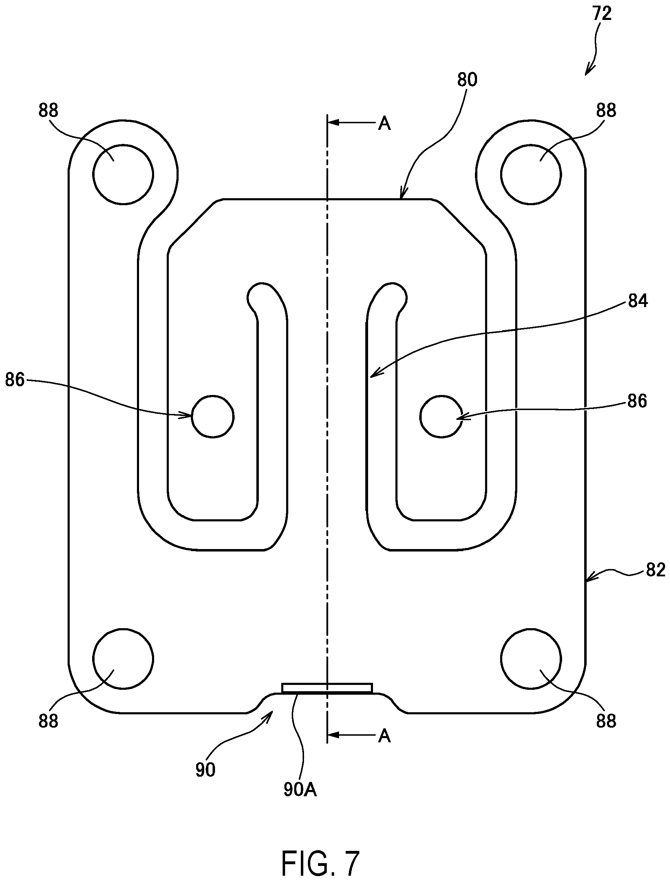

FIG. 6 is an exploded perspective view showing the load cell (40, 42, 44, 46) according to the first embodiment. FIG. 7 is a plan view showing a strain generating body 72 of the load cell (40, 42, 44, 46) according to the first embodiment.

As shown in FIG. 6, a bridge 60 is attached to each of the load cells 40, 42, 44, and 46. As an example, the bridge 60 is formed of a metal plate having a rectangular shape. A step portion 62 is formed at the center of the bridge 60 so as to protrude upward. A pair of round holes 64 are formed in the step portion 62.

Crimping parts 66 are formed at four corners of a peripheral edge portion of the bridge 60. The bridge 60 is fixed to each of the load cells 40, 42, 44, and 46 by the crimping parts 66.

A double-sided tape 68 is adhered to the step portion 62 of the bridge 60. U-shaped notches 70 are formed at side edges of the double-sided tape 68. The notches 70 are provided at positions so as to avoid the round holes 64 of the step portion 62 of the bridge 60. An upper surface of the double-sided tape 68 is adhered to the reinforcement plate 20 of the loading platform 16. With such a configuration, the loading platform 16 is fixed on top of each of the load cells 40, 42, 44, and 46 (see FIG. 2).

### (Load Cell)

Each of the load cells 40, 42, 44, and 46 is provided with the strain generating body 72 and a strain sensor 74 provided on the strain generating body 72.

Here, the load cell (40, 42, 44, 46) in this embodiment refers to one that is formed of the strain generating body 72, respective strain gauges 120, 122, 124, and 126 that are provided on the strain generating body 72, and a circuit (150), which will be described below, that connects the respective strain gauges 120, 122, 124, and 126. In addition, the respective strain gauges 120, 122, 124, and 126 and the circuit (150) are provided on the strain sensor 74, and a detailed description thereof will be given below.

### [Strain Generating Body]

As shown in FIG. 7, the strain generating body 72 that forms each of the load cells 40, 42, 44, and 46 is provided with a fixed portion 80 that is supported by the case base 14 and a load receiving portion 82 that supports the loading platform 16. In addition, the strain generating body 72 that forms each of the load cells 40, 42, 44, and 46 is provided with a strain generating part 84 that connects the fixed portion 80 and the load receiving portion 82 and elastically deforms as the load receiving portion 82 is displaced downwardly.

As an example, the strain generating body 72 is formed of a metal plate. The fixed portion 80 is formed to have a C-shape. Inner fixing holes 86 are formed in both end portions of the fixed portion 80. To the inner fixing holes 86, the fastening members 32, which are respectively inserted into the insertion holes 54 of the foundation portions 48 provided on the case base 14, are fixed (see FIG. 2).

With such a configuration, in the strain generating body 72, the fixed portion 80 is fixed, in surface contacted state, to the protruding portions 52 of the foundation portions 48 of the case base 14, and the fixed portion 80 fixed to the case base 14 can also be referred to as a fixed portion forming the fixed side.

The load receiving portion 82 is formed to have a C-shape that is larger than that of the fixed portion 80. The fixed portion 80 is arranged inside the load receiving portion 82. Outer fixing holes 88 are respectively formed at four corners of the load receiving portion 82. The crimping parts 66 of the bridge 60 that supports the loading platform 16 are respectively fixed to the outer fixing holes 88.

With such a configuration, the load from the loading platform 16 is applied evenly over the entire surface of the C-shaped load receiving portion 82, and the load receiving portion 82 is moved in the vertical direction while maintaining a substantially horizontal orientation. The load receiving portion 82 can also be referred to as a movable portion forming the movable side.

On an outer edge of the load receiving portion 82 located on the opposite side with respect to an inner edge thereof, from which the strain generating part 84 extends, a recessed portion 90 is formed so as to be recessed inwardly. The recessed portion 90 is arranged on the extension of the strain generating part 84.

The center of the fixed portion 80 and the center of the load receiving portion 82 are integrally connected by the strain generating part 84. The strain generating part 84 that connects the fixed portion 80 and the load receiving portion 82 is formed to have a rectangular shape.

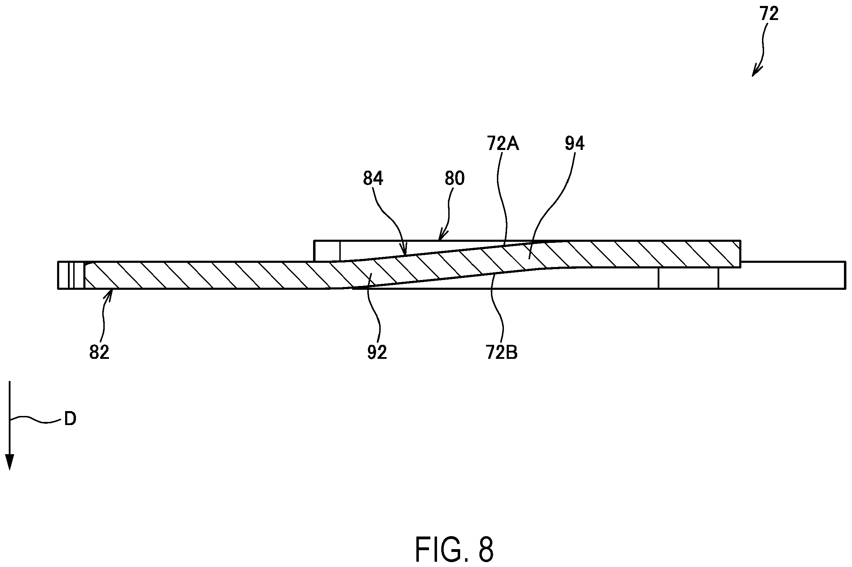

FIG. 8 is a sectional view taken along line A-A in FIG. 7. FIG. 8 shows a state in which
the load receiving portion 82 is displaced downward D with respect to the fixed portion 80 by the load applied to the loading platform 16.

The strain generating part 84 is elastically deformed into an S-shape as the load receiving portion 82 is displaced downward D under the load applied from the loading platform 16 (see FIG. 2).

Specifically, in a state in which the load receiving portion 82 is displaced downward D and the strain generating part 84 is elastically deformed, as shown in FIG. 8, a downwardly curved part 92, which is deformed into a curved shape projecting downward D, is formed at a part in the vicinity of the load receiving portion 82 that supports the loading platform 16 in the strain generating part 84. In addition, in the strain generating part 84, an upwardly curved part 94, which is deformed into a curved shape projecting upward, is formed at a part in the vicinity of the fixed portion 80 that is fixed to the case base 14.

The upper curved part 94, which is deformed into a curved shape projecting upward, indicates a convex portion deformed into a convex shape. The downwardly curved part 92, which is deformed into a curved shape projecting downward D, indicates a concave portion deformed into a concave shape.

### [Strain Sensor]

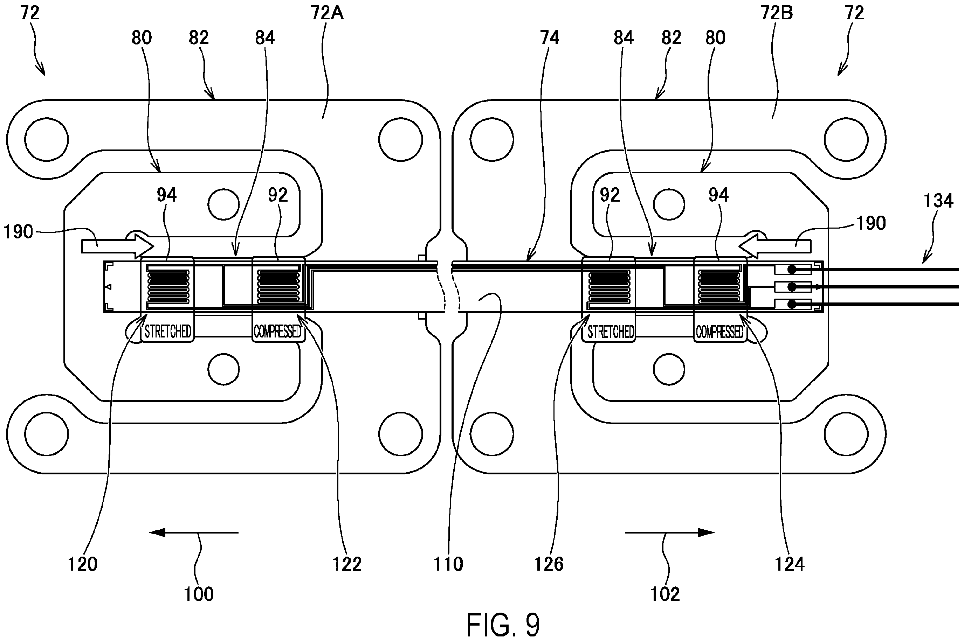

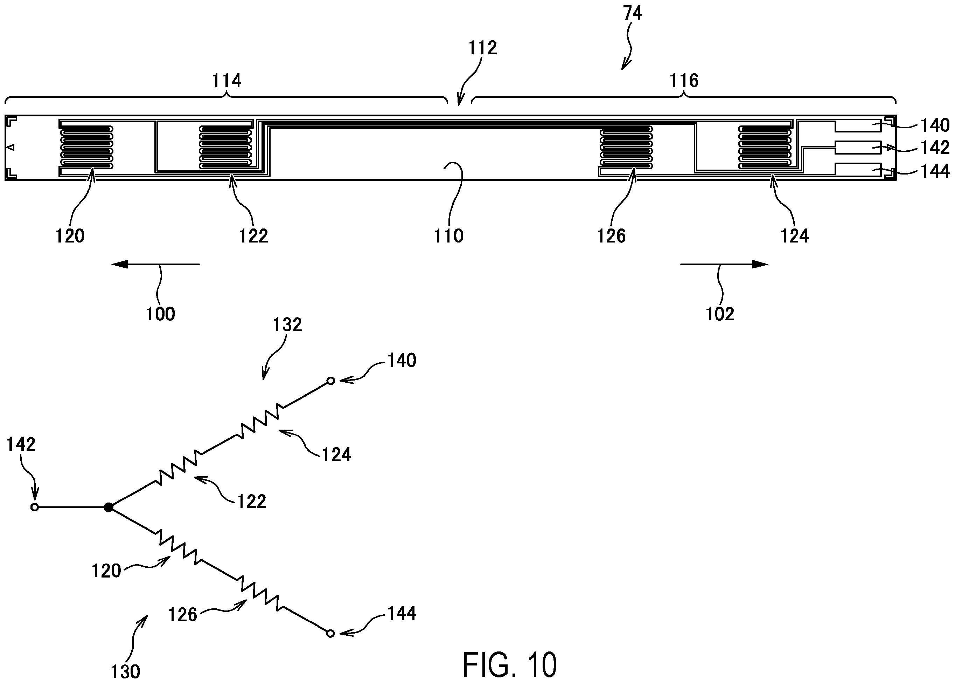

FIG. 9 is an explanatory diagram showing a state in which the strain sensor 74 according to the first embodiment is attached to the strain generating body 72. FIG. 9 is a diagram showing an upper surface 72A of the strain generating body 72 on which a first end side 100 of the strain sensor 74 is arranged and a lower surface 72B of the strain generating body 72 on which a second end side 102 of the strain sensor 74 is arranged. FIG. 10 is an explanatory diagram showing the strain sensor 74 according to the first embodiment and the circuits formed on the strain sensor 74.

Here, the upper surface 72A of the strain generating body 72 indicates a front surface of the strain generating body 72, and the same shall apply hereinafter. In addition, the lower surface 72B of the strain generating body 72 indicates a back surface of the strain generating body 72, and the same shall apply hereinafter.

As shown in FIGs. 5 and 9, the strain sensor 74 that forms each of the load cells 40, 42, 44, and 46 includes a strip-shaped sheet body 110 that is attached to the strain generating part 84 in a folded state at the edge portion of the strain generating body 72. In addition, the strain sensor 74, which forms each of the load cells 40, 42, 44, and 46, is provided with the strain gauges (120, 122, 126, and 124) that are provided on the sheet body 110.

The sheet body 110 is formed of a flexible substrate on which electronic components or the printed wiring are integrally formed. The sheet body 110 is formed in the form of a film. The sheet body 110 has foldable flexibility. The sheet body 110 is formed by including synthetic resin. As an example, the sheet body 110 is composed of a polyimide resin including polyimide.

As shown in FIG. 10, the sheet body 110 is designed with a foldable portion 112, which is folded back when it is to be attached, at the central part in the longitudinal direction. With such a configuration, as shown in FIG. 6, the strain sensor 74 is attached to the strain generating body 72 in a state in which the foldable portion 112 is folded back at an edge 90A of the recessed portion 90 that is formed on an outer edge of the load receiving portion 82 of the strain generating body 72.

As shown in FIG. 5, each of the load cells 40, 42, 44, and 46 is provided such that the outer edge of the load receiving portion 82, which has the recessed portion 90 at which the strain sensor 74 is folded back, is arranged at a position close to the periphery of the case base 14 forming a case.

In this embodiment, although a description has been given of a case in which the load receiving portion 82 of each of the load cells 40, 42, 44, and 46 is arranged at the position close to the periphery of the case base 14, the present invention is not limited thereto.

For example, the fixed portion 80 of each of the load cells 40, 42, 44, and 46 may be arranged at the position close to the periphery of the case base 14. In this case, the strain sensor 74 may be configured so as to be folded back at an edge of the fixed portion 80. In other words, the strain sensor 74 is folded back at the outer edge closer to the periphery of the case base 14 among the outer edge of the fixed portion 80 and the outer edge of the load receiving portion 82.

Here, it is preferable that the foldable portion 112 of the sheet body 110 of the strain sensor 74 be arranged at the position close to the periphery of the case base 14. In other words, heat may be applied to the foldable portion 112 of the strain sensor 74 via the loading platform 16 or the case base 14 of the scale 10. In addition, heat transmitted to the internal atmosphere of the scale 10 may also be applied to the foldable portion 112 of the strain sensor 74. In this case, the heat applied to the foldable portion 112 of the strain sensor 74 may influence each of the strain gauges 120, 122, 126, and 124 via wiring parts provided in the strain sensor 74.

Thus, the foldable portion 112 of the strain sensor 74 is arranged at the position close to the periphery of the case base 14. With such a configuration, the wiring parts of the foldable portion 112 of the strain sensor 74 can be arranged at the position close to the periphery of the case base 14, and thereby, it is possible to suppress the influences of the heat described above.

In addition, as shown in FIGs. 9 and 10, in the sheet body 110, the first end side 100, which is separated by the foldable portion 112, forms an upper-surface arrangement region 114 that is to be arranged on the upper surface 72A of the strain generating body 72. In addition, in the sheet body 110, the second end side 102, which is separated by the foldable portion 112, forms a lower-surface arrangement region 116 that is to be arranged on the lower surface 72B of the strain generating body 72.

On the upper-surface arrangement region 114, the first strain gauge 120 and the second strain gauge 122, which are to be arranged on the upper surface 72A of the strain generating body 72, are provided.

As shown in FIG. 9, the first strain gauge 120 is arranged on the first end side 100 of the upper-surface arrangement region 114. The first strain gauge 120 is arranged on the part of the upper surface 72A of the strain generating part 84 in the vicinity of the fixed portion 80 in a state in which the strain sensor 74 is attached to the strain generating body 72.

As shown in FIG. 8, the part of the strain generating part 84 in the vicinity of the fixed portion 80 forms the upwardly curved part 94 that deforms in an upwardly protruding curved shape in a state in which the strain generating part 84 is elastically deformed, and the first strain gauge 120 is arranged on the upper surface 72A of the upwardly curved part 94.

As shown in FIG. 9, the second strain gauge 122 is arranged on the second end side 102 of the upper-surface arrangement region 114. The second strain gauge 122 is arranged on the part of the upper surface 72A of the strain generating part 84 in the vicinity of the load receiving portion 82 in a state in which the strain sensor 74 is attached to the strain generating body 72.

As shown in FIG. 8, the part of the strain generating part 84 in the vicinity of the load receiving portion 82 forms the downwardly curved part 92 that deforms in a downwardly protruding curved shape in a state in which the strain generating part 84 is elastically deformed, and the second strain gauge 122 is arranged on the upper surface 72A of the downwardly curved part 92.

On the lower-surface arrangement region 116, the fourth strain gauge 124 and the third strain gauge 126, which are arranged on the lower surface 72B of the strain generating body 72, are provided.

As shown in FIG. 9, the fourth strain gauge 124 is arranged on the second end side 102 of the lower-surface arrangement region 116. The fourth strain gauge 124 is arranged on the part of the lower surface 72B of the strain generating part 84 in the vicinity of the fixed portion 80 in a state in which the strain sensor 74 is attached to the strain generating body 72.

As shown in FIG. 8, the part of the strain generating part 84 in the vicinity of the fixed portion 80 forms the upwardly curved part 94 that deforms in the upwardly protruding curved shape in a state in which the strain generating part 84 is elastically deformed, and the fourth strain gauge 124 is arranged on the lower surface 72B of the upwardly curved part 94.

As shown in FIG. 9, the third strain gauge 126 is arranged on the first end side 100 of the lower-surface arrangement region 116. The third strain gauge 126 is arranged on the part of the lower surface 72B of the strain generating part 84 in the vicinity of the load receiving portion 82 in a state in which the strain sensor 74 is attached to the strain generating body 72.

As shown in FIG. 8, the part of the strain generating part 84 in the vicinity of the load receiving portion 82 forms the downwardly curved part 92 that deforms in the downwardly protruding curved shape in a state in which the strain generating part 84 is elastically deformed, and the third strain gauge 126 is arranged on the lower surface 72B of the downwardly curved part 92.

As shown in FIG. 10, each of the strain gauges 120, 122, 124, and 126 is formed of a resistance body. Each of the strain gauges 120, 122, 124, and 126 can also be referred to as an electronic component provided on the sheet body 110. Each of the strain gauges 120, 122, 124, and 126 may also be formed of an electronic component that detects strain.

The resistance body forming each of the strain gauges 120, 122, 124, and 126 is formed of a material that includes a metal. The resistance body is formed of a metal foil as an example. In addition, the metal foil forming the resistance body is composed of a material that includes a constantan as an example.

The resistance body forming each of the strain gauges 120, 122, 124, and 126 is formed of a printed pattern that is folded multiple times. The electrical resistance of the resistance body forming each of the strain gauges 120, 122, 124, and 126 changes in accordance with expansion and contraction.

Specifically, the resistance value of the resistance body forming each of the strain gauges 120, 122, 124, and 126 is reduced when it is subjected to a compressive force and compressed. In addition, the resistance value of the resistance body forming each of the strain gauges 120, 122, 124, and 126 is increased when it is subjected to a tensile force and stretched. As a result, the resistance value of the resistance body forming each of the strain gauges 120, 122, 124, and 126 changes in response to the expansion and contraction caused by the deformation of the strain generating part 84.

A first end of the first strain gauge 120 and a second end of the third strain gauge 126 are connected by the printed wiring. The first strain gauge 120 and the third strain gauge 126 forming the resistance body are connected in series. With such a configuration, on the sheet body 110, a first serial circuit 130 in which the first strain gauge 120 and the third strain gauge 126 are connected in series is formed.

In addition, the first strain gauge 120 and the third strain gauge 126 are subjected to the tensile force in a state in which the strain generating part 84 is elastically deformed. As a result, the first serial circuit 130 is formed of the first strain gauge 120 and the third strain gauge 126 that are subjected to the tensile force in a state in which the strain generating part 84 is elastically deformed.

A first end of the second strain gauge 122 and a second end of the fourth strain gauge 124 are connected by the printed wiring. The second strain gauge 122 and the fourth strain gauge 124 forming the resistance body are connected in series. With such a configuration, on the sheet body 110, a second serial circuit 132 in which the fourth strain gauge 124 and the second strain gauge 122 are connected in series is formed.

In addition, the second strain gauge 122 and the fourth strain gauge 124 are subjected to the compressive force in a state in which the strain generating part 84 is elastically deformed. As a result, the second serial circuit 132 is formed of the second strain gauge 122 and the fourth strain gauge 124 that are subjected to the compressive force in a state in which the strain generating part 84 is elastically deformed.

In a second end portion of the strain sensor 74, a first terminal 140, a second terminal 142, and a third terminal 144 are formed integrally with the sheet body 110. These terminals are formed of tabs to which lead wires 134 are soldered (see FIG. 9).

The printed wiring extending from the first terminal 140 is connected to a first end of the fourth strain gauge 124 forming the second serial circuit 132. The strain sensor 74 is provided with the first terminal 140 that is connected to a first end of the second serial circuit 132. The printed wiring extending from the third terminal 144 is connected to a first end of the third strain gauge 126 forming the first serial circuit 130. The strain sensor 74 is provided with the third terminal 144 that is connected to the first end of the second serial circuit 132.

The printed wiring extending from the second terminal 142 is connected to a second end of the second strain gauge 122 forming the first serial circuit 130 and a second end of the first strain gauge 120 forming the second serial circuit 132. With such a configuration, the strain sensor 74 is provided with the second terminal 142 that is connected to a second end of the first serial circuit 130 and a second end of the second serial circuit 132.

### (Circuit Configuration)

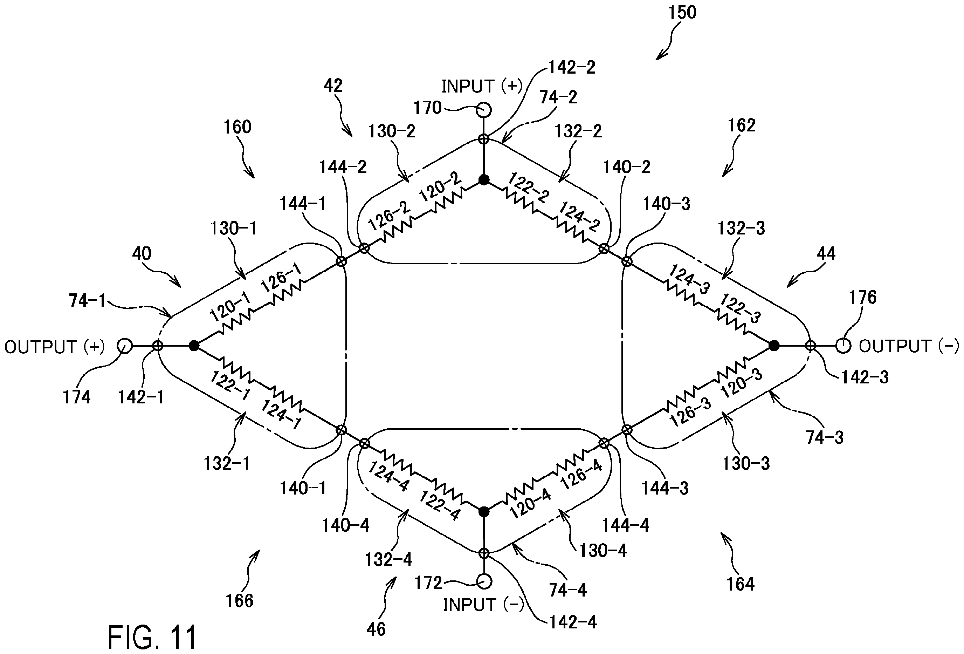

FIG. 11 is a diagram showing a Wheatstone bridge circuit 150 that is formed by connecting the respective strain gauges 120, 122, 124, and 126 of the load cells 40, 42, 44, and 46 according to the first embodiment. The Wheatstone bridge circuit 150 is formed of the respective strain gauges 120, 122, 124, and 126 of the strain sensors 74 of the load cells 40, 42, 44, and 46 respectively provided at four corners of the scale 10.

In FIG. 11, a description will be given by assigning "-1" at the end of the reference signs of the strain sensor 74, each of the strain gauges 120, 122, 124, and 126, each of the serial circuits 130 and 132, and each of the terminals 140, 142, and 144 of the first load cell 40. In addition, a description will be given by assigning "-2" at the end of the reference signs of the strain sensor 74, each of the strain gauges 120, 122, 124, and 126, each of the serial circuits 130 and 132, and each of the terminals 140, 142, and 144 of the second load cell 42.

A description will be given by assigning "-3" at the end of the reference signs of the strain sensor 74, each of the strain gauges 120, 122, 124, and 126, each of the serial circuits 130 and 132, and each of the terminals 140, 142, and 144 of the third load cell 44. In addition, a description will be given by assigning "-4" at the end of the reference signs of the strain sensor 74, each of the strain gauges 120, 122, 124, and 126, each of the serial circuits 130 and 132, and each of the terminals 140, 142, and 144 of the fourth load cell 46.

The first terminal 140-1 of the strain sensor 74-1 in the first load cell 40 is connected to the first terminal 140-4 of the strain sensor 74-4 in the fourth load cell 46. The third terminal 144-4 of the strain sensor 74-4 in the fourth load cell 46 is connected to the third terminal 144-3 of the strain sensor 74-3 in the third load cell 44.

The first terminal 140-3 of the strain sensor 74-3 in the third load cell 44 is connected to the first terminal 140-2 of the strain sensor 74-2 in the second load cell 42. The third terminal 144-2 of the strain sensor 74-2 in the second load cell 42 is connected to the third terminal 144-1 of the strain sensor 74-1 in the first load cell 40.

The Wheatstone bridge circuit 150 includes a first arm 160, a second arm 162, a third arm 164, and a fourth arm 166. The first arm 160 opposes to the third arm 164, and the second arm 162 opposes to the fourth arm 166.

The first arm 160 is formed of a circuit in which the first serial circuit 130-1 of the strain sensor 74-1 in the first load cell 40 and the first serial circuit 130-2 of the strain sensor 74-2 in the second load cell 42 are connected in series. With such a configuration, the first arm 160 is formed of the first serial circuits 130-1 and 130-2 having the strain gauges 120-1, 126-1, 120-2, 126-2 to which the tensile force is applied in a state in which the strain generating part 84 is elastically deformed.

The second arm 162 is formed of a circuit in which the second serial circuit 132-2 of the strain sensor 74-2 in the second load cell 42 and the second serial circuit 132-3 of the strain sensor 74-3 in the third load cell 44 are connected in series. With such a configuration, the second arm 162 is formed of the second serial circuits 132-2 and 132-3 having the strain gauges 122-2, 124-2, 124-3, 122-3 to which the compressive force is applied in a state in which the strain generating part 84 is elastically deformed.

The third arm 164 is formed of a circuit in which the first serial circuit 130-3 of the strain sensor 74-3 in the third load cell 44 and the first serial circuit 130-4 of the strain sensor 74-4 in the fourth load cell 46 are connected in series. With such a configuration, the third arm 164 that opposes to the first arm 160 is formed of the first serial circuits 130-3 and 130-4 having the strain gauges 120-4, 126-4, 126-3, 120-3 to which the tensile force is applied in a state in which the strain generating part 84 is elastically deformed.

The fourth arm 166 is formed of a circuit in which the second serial circuit 132-4 of the strain sensor 74-4 in the fourth load cell 46 and the second serial circuit 132-1 of the strain sensor 74-1 in the first load cell 40 are connected in series. With such a configuration, the fourth arm 166 that opposes to the second arm 162 is formed of the second serial circuits 132-1 and 132-4 having the strain gauges 122-1, 124-1, 124-4, 122-4 to which the compressive force is applied in a state in which the strain generating part 84 is elastically deformed.

In the Wheatstone bridge circuit 150, the second terminal 142-2 of the strain sensor 74-2 in the second load cell 42 forms a positive input terminal 170 to which the positive voltage is applied. In addition, the second terminal 142-4 of the strain sensor 74-4 in the fourth load cell 46 forms a negative input terminal 172 to which the negative voltage is applied.

In addition, in the Wheatstone bridge circuit 150, the second terminal 142-1 of the strain sensor 74-1 in the first load cell 40 forms a positive output terminal 174 that outputs the positive voltage. In addition, the second terminal 142-3 of the strain sensor 74-3 in the third load cell 44 forms a negative output terminal 176 that outputs the negative voltage.

The positive output terminal 174 and the negative output terminal 176 are connected to a control unit (not shown). The control unit computes the load applied to the loading platform 16 from an electric potential between the positive output terminal 174 and the negative output terminal 176 and displays a computation result on the display 12.

### (Operations and Effects)

Next, operational advantages achieved by this embodiment will be described.

The load cell (40, 42, 44, 46) of this embodiment is provided with the strain generating body 72 having the strain generating part 84, the strain generating part 84 being configured to connect the fixed portion 80 that is supported by the case base 14 and the load receiving portion 82 that supports the loading platform 16, and the strain generating part 84 being elastically deformed by the displacement of the load receiving portion 82. In addition, the load cell (40, 42, 44, 46) is provided with: the first strain gauge 120 arranged on the part of the upper surface 72A of the strain generating part 84 in the vicinity of the fixed portion 80; and the second strain gauge 122 arranged on the part of the upper surface 72A of the strain generating part 84 in the vicinity of the load receiving portion 82. Furthermore, the load cell (40, 42, 44, 46) is provided with: the third strain gauge 126 arranged on the part of the lower surface 72B of the strain generating part 84 in the vicinity of the load receiving portion 82 and the fourth strain gauge 124 arranged on the part of the lower surface 72B of the strain generating part 84 in the vicinity of the fixed portion 80. The load cell (40, 42, 44, 46) is provided with: the first serial circuit 130 in which the first strain gauge 120 and the third strain gauge 126 are connected in series; and the second serial circuit 132 in which the fourth strain gauge 124 and the second strain gauge 122 are connected in series.

In addition, the strain sensor 74 in this embodiment is the strain sensor 74 that is provided on the strain generating body 72 having the strain generating part 84, the strain generating part 84 being configured to connect the fixed portion 80 that is supported by the case base 14 and the load receiving portion 82 that supports the loading platform 16, and the strain generating part 84 being elastically deformed by the displacement of the load receiving portion 82. The strain sensor 74 includes: the strip-shaped sheet body 110 attached to the strain generating part 84 in a state in which the sheet body 110 is folded back at the edge portion of the strain generating body 72; and the strain gauges (120, 122, 126, 124) provided on the sheet body 110. The strain gauges (120, 122, 126, 124) include: the first strain gauge 120 arranged on the part of the upper surface 72A of the strain generating part 84 in the vicinity of the fixed portion 80; and the second strain gauge 122 arranged on the part of the upper surface 72A of the strain generating part 84 in the vicinity of the load receiving portion 82. In addition, the strain gauges (120, 122, 126, 124) include: the third strain gauge 126 arranged on the part of the lower surface 72B of the strain generating part 84 in the vicinity of the load receiving portion 82; and the fourth strain gauge 124 arranged on the part of the lower surface 72B of the strain generating part 84 in the vicinity of the fixed portion 80. The first strain gauge 120 and the third strain gauge 126 are connected in series in the first serial circuit 130, and the fourth strain gauge 124 and the second strain gauge 122 are connected in series in the second serial circuit 132.

Furthermore, the scale 10 in this embodiment includes: the case base 14 configured to support the fixed portion 80 of the load cell (40, 42, 44, 46); and the loading platform 16 supported by the load receiving portion 82 of the load cell (40, 42, 44, 46).

In the scale 10 using the load cells (40, 42, 44, 46) of such a configuration, the heat applied from the case base 14 to the fixed portion 80 of the strain generating body 72 is transferred to the load receiving portion 82 via the strain generating part 84. In addition, the heat applied from the loading platform 16 to the load receiving portion 82 of the strain generating body 72 is transferred to the fixed portion 80 via the strain generating part 84. As a result, a temperature gradient is caused in the strain generating part 84 of the strain generating body 72, and a temperature difference is caused between the part of the strain generating part 84 in the vicinity of the fixed portion 80 and the part of the strain generating part 84 in the vicinity of the load receiving portion 82.

At the part of the strain generating part 84 in the vicinity of the fixed portion 80, the first strain gauge 120 is arranged on the upper surface 72A thereof, and the fourth strain gauge 124 is arranged on the lower surface 72B thereof. In addition, at the part of the strain generating part 84 in the vicinity of the load receiving portion 82, the second strain gauge 122 is arranged on the upper surface 72A thereof, and the third strain gauge 126 is arranged on the lower surface 72B thereof.

Here, as shown in FIG. 9, in a case in which the scale 10 is located at the warmed part, the heat applied from the case base 14 to the fixed portion 80 of the strain generating body 72 is transferred to the load receiving portion 82 via the strain generating part 84. As a result, on the strain generating part 84, heat transfer paths 190, through which the heat is transferred from the fixed portion 80 towards the load receiving portion 82, are formed.

Therefore, the temperature of the parts where the first strain gauge 120 and the fourth strain gauge 124 are arranged becomes higher than the temperature of the parts where the second strain gauge 122 and the third strain gauge 126 are arranged. As a result, the influence of the heat transferred to the strain generating part 84 on the measurement values of the first strain gauge 120 and the fourth strain gauge 124 is greater than the influence on the measurement values of the second strain gauge 122 and the third strain gauge 126.

The first strain gauge 120, at which the temperature difference caused in the strain generating part 84 has a large influence on the measurement value, and the third strain gauge 126, at which the temperature difference caused in the strain generating part 84 has a small influence on the measurement value, are connected in series in the first serial circuit 130.

In addition, the fourth strain gauge 124, at which the temperature difference caused in the strain generating part 84 has a large influence on the measurement value, and the second strain gauge 122, at which the temperature difference caused in the strain generating part 84 has a small influence on the measurement value, are connected in series in the second serial circuit 132. With such a configuration, in the first serial circuit 130 and the second serial circuit 132, errors due to the thermal effects occur similarly in both circuits, and thereby, the errors in both circuits are averaged out.

Consequently, by employing the first serial circuit 130 and the second serial circuit 132, it is possible to suppress the influence of the temperature gradient caused in the strain generating part 84 on the measurement value. Therefore, it is possible to suppress the influence on the measurement results due to the usage conditions.

Specifically, the Wheatstone bridge circuit 150 is formed by the respective serial circuits 130 and 132 of the strain sensor 74. Thus, it is possible to respectively arrange the strain gauges 120 and 124, at which significant increase in the resistance value is observed, and the strain gauges 122 and 126, at which less increase in the resistance value is observed, on the arms 160, 162, 164, and 166 of the Wheatstone bridge circuit 150 such that they are well balanced.

With such a configuration, the balance of the resistance values of the respective arms 160, 162, 164, and 166 in adjacent positions can be maintained, and so, it is possible to suppress the influence of the temperature gradient caused in the strain generating part 84 on the measurement value and to suppress the influence on the measurement results due to the usage conditions.

In addition, in the load cell (40, 42, 44, 46) of this embodiment, the first strain gauge 120 is arranged on the upper surface 72A of the part that deforms in the upwardly protruding curved shape in a state in which the strain generating part 84 is elastically deformed. In addition, in the load cell (40, 42, 44, 46), the fourth strain gauge 124 is arranged on the lower surface 72B of the part that deforms in the upwardly protruding curved shape in a state in which the strain generating part 84 is elastically deformed.

Furthermore, in the load cell (40, 42, 44, 46), the second strain gauge 122 is arranged on the upper surface 72A of the part that deforms in the downwardly protruding curved shape in a state in which the strain generating part 84 is elastically deformed. In addition, in the load cell (40, 42, 44, 46), the third strain gauge 126 is arranged on the lower surface 72B of the part that deforms in the downwardly protruding curved shape in a state in which the strain generating part 84 is elastically deformed.

In addition, in the strain sensor 74 in this embodiment, in a state in which the strain generating part 84 is elastically deformed, the first strain gauge 120 is arranged on the upper surface 72A of the part that deforms in the upwardly protruding curved shape, and the fourth strain gauge 124 is arranged on the lower surface 72B of the part that deforms in the upwardly protruding curved shape. In addition, the second strain gauge 122 is arranged on the upper surface 72A of the part that deforms in the downwardly protruding curved shape, and the third strain gauge 126 is arranged on the lower surface 72B of the part that deforms in the downwardly protruding curved shape.

According to such a configuration, the first serial circuit 130 is formed of the first strain gauge 120 and the third strain gauge 126 to which the tensile force is applied in a state in which the strain generating part 84 is elastically deformed. In addition, the second serial circuit 132 is formed of the fourth strain gauge 124 and the second strain gauge 122 to which the compressive force is applied in a state in which the strain generating part 84 is elastically deformed.

Therefore, while suppressing the influence due to the temperature difference caused in the strain generating part 84, it is possible to acquire the measurement value under the tensile force generated in the strain generating part 84 elastically deformed in the first serial circuit 130. While suppressing the influence due to the temperature difference caused in the strain generating part 84, it is possible to acquire the measurement value under the compressive force generated in the strain generating part 84 elastically deformed in the second serial circuit 132.

As a result, it is possible to improve the measurement accuracy.

In addition, the load cell (40, 42, 44, 46) in this embodiment is provided with the strain sensor 74 having the strip-shaped sheet body 110. In the strain sensor 74, the first strain gauge 120, the second strain gauge 122, the fourth strain gauge 124, the third strain gauge 126, the first serial circuit 130, and the second serial circuit 132 are provided integrally.

In addition, in a state in which the strain sensor 74 is folded back at the edge 90A of the strain generating body 72, the first strain gauge 120 and the second strain gauge 122 are arranged on the upper surface 72A of the strain generating part 84, and the fourth strain gauge 124 and the third strain gauge 126 are arranged on the lower surface 72B of the strain generating part 84.

According to such a configuration, by attaching the strain sensor 74 to the strain generating body 72 by folding it at the edge 90A of the strain generating body 72, it is possible to arrange the first strain gauge 120 and the second strain gauge 122 on the upper surface 72A of the strain generating part 84. In addition, it is possible to arrange the fourth strain gauge 124 and the third strain gauge 126 on the lower surface 72B of the strain generating part 84. With such a configuration, the ease of assembly of each of the load cells 40, 42, 44, and 46 is improved.

In addition, each of the strain gauges 120, 122, 126, and 124 and each of the serial circuits 130 and 132 are provided on the strain sensor 74 integrally. Thus, compared with a case in which the strain gauges 120, 122, 126, and 124 are each provided independently, it is possible to reduce the cost of component management.

In addition, in the load cell (40, 42, 44, 46) in this embodiment, the sheet body 110 is formed of a material that includes a synthetic resin.

In such a configuration, the sheet body 110 made of the synthetic resin has a different coefficient of linear expansion with respect to each of the strain gauges 120, 122, 126, and 124. Therefore, when heat is applied to the strain generating body 72, the expansion coefficient of the sheet body 110 of the strain sensor 74 differs from the expansion coefficient of each of the strain gauges 120, 122, 126, and 124, which are provided integrally on the sheet body 110. As a result, the difference in the expansion coefficient may cause strain, thereby increasing the influence on the measurement value.

However, in this embodiment, the influence imparted on the measurement value by the temperature difference caused in the strain generating part 84 can be suppressed. Therefore, even in a case in which the coefficient of linear expansion of each of the strain gauges 120, 122, 126, and 124 differs from that of the sheet body 110, it is possible to suppress the influence on the measurement results due to the usage conditions.

Furthermore, in the load cell (40, 42, 44, 46) in this embodiment, the sheet body 110 is formed of a material that includes polyimide.

In such a configuration, it is possible to form the strain sensor 74 with the flexible substrate in which the sheet body 110 is made of polyimide. With such a configuration, it is possible to reduce production cost.

In addition, in the load cell (40, 42, 44, 46) in this embodiment, the strain sensor 74 is folded back at the edge of the strain generating body 72 that is arranged at the position close to the periphery of the case, to which the strain generating body 72 is attached.

In such a configuration, specifically, each of the load cells 40, 42, 44, and 46 is provided such that the edge 90A of the load receiving portion 82 is arranged at the position close to the periphery of the case base 14. The lead wires 134 extending from the end portion of the strain sensor 74 are then extended towards the inside of the case base 14. With such a configuration, as an example, it becomes easier to wire to a control board arranged at the central part of the case base 14.

In addition, by folding back the strain sensor 74 at the edge 90A of the load receiving portion 82 that is movable together with the loading platform 16, the attachment positions of the lead wires 134 are prevented from being on the movable side of the strain generating body 72. In contrast, if the lead wires 134 are wired to the side of the load receiving portion 82, which is movable, there is a possibility that tension may be imparted on the lead wires 134 or that the lead wires 134 may physically come into contact with the case base 14. In this case, the detection of the load may be affected.

Thus, in this embodiment, by drawing out the lead wires 134 from the side of the fixed portion 80, which is not movable, it becomes possible to suppress the influence on the detection of the load.

In addition, the strain sensor 74 is folded back at the edge 90A of the load receiving portion 82 that is arranged at the position close to the periphery of the case base 14. The foldable portion 112 of the strain sensor 74 is then arranged at the position close to the periphery of the case base 14. With such a configuration, the wiring parts of the foldable portion 112 is kept as far away as possible from the center of the scale 10 such that the heat is not applied to the wiring parts of the foldable portion 112 of the strain sensor 74.

In other words, the part where the heat is applied during use in the scale 10 includes the central portion of the loading platform 16. The heat applied to the central part of the loading platform 16 is transferred through the loading platform 16 and is also transferred to the internal atmosphere of the scale 10.

Here, the foldable portion 112 of the strain sensor 74 may be detached from the strain generating body 72. This detached portion is susceptible to the influence of the heat transfer in the surrounding atmosphere.

Thus, in this embodiment, by arranging the foldable portion 112 of the strain sensor 74 that may be detached from the strain generating body 72 at the position close to the periphery of the case base 14, the heat to be applied to the foldable portion 112 is suppressed. As a result, it is possible to suppress the influence of the heat in the surrounding atmosphere on the detection of the load.

In addition, the load cell (40, 42, 44, 46) of this embodiment, the first strain gauge 120, the second strain gauge 122, the fourth strain gauge 124, and the third strain gauge 126 include the resistance body whose resistance value is changed in response to the expansion and contraction caused by the deformation of the strain generating part 84.

In such a configuration, it becomes possible to acquire the magnitude of the tensile force or the compressive force experienced by each of the strain gauges 120, 122, 126, and 124 as change in the resistance value.

In addition, in the load cell in this embodiment, the resistance body includes metal.

In such a configuration, by forming the resistance body with the printed pattern including metal for example, it becomes possible to form each of the strain sensor.

Here, a description will be given, as an example, of a case in which the sheet body 110 has different coefficient of linear expansion from each of the strain gauges 120, 122, 126, and 124, and the expansion coefficient of the sheet body 110 is larger than the expansion coefficient of each of the strain gauges 120, 122, 126, and 124.

In this case, compared with the second strain gauge 122 and the third strain gauge 126 that are provided on the downstream side of the heat transfer paths 190, the first strain gauge 120 and the fourth strain gauge 124 that are provided on the upstream side of the heat transfer paths 190 are stretched greatly by the thermally expanded sheet body 110. As a result, the resistance values of the first strain gauge 120 and the fourth strain gauge 124 become higher than those of the second strain gauge 122 and the third strain gauge 126.

In addition, the resistance value of metal forming each of the strain gauges 120, 122, 126, and 124 is increased when the heat is applied. Thus, compared with the second strain gauge 122 and the third strain gauge 126 that are provided on the downstream side of the heat transfer paths 190, a greater change in the resistance value due to the heat is exhibited for the first strain gauge 120 and the fourth strain gauge 124 that are provided on the upstream side of the heat transfer paths 190.

As a result of these factors, compared with the resistance values of the second strain gauge 122 and the third strain gauge 126, the overall resistance values of the first strain gauge 120 and the fourth strain gauge 124 become higher.

However, in this embodiment, with the configuration described above, it is possible to suppress the influence of the temperature difference caused in the strain generating part 84 on the measurement value. Therefore, even in a case in which the coefficient of linear expansion of the sheet body 110 is different from that of each of the strain gauges 120, 122, 126, and 124, it is possible to suppress the influence on the measurement results due to the usage conditions.

In the scale 10 in this embodiment, the loading platform 16 has a rectangular shape, and the load cell (40, 42, 44, 46) is arranged at each of the four corners of the loading platform 16.

With such a configuration, it is possible to perform the measurement by using the strain sensor 74 of each of the load cells 40, 42, 44, and 46 provided at each of the four corners of the loading platform 16. As a result, it is possible to improve the measurement accuracy.

In addition, the strain sensor 74 in this embodiment includes: the first terminal 140 connected to the first end of the second serial circuit 132; the second terminal 142 connected to the second end of the first serial circuit 130 and the second end of the second serial circuit 132; and the third terminal 144 connected to the first end of the first serial circuit 130.

With such a configuration, because there is no need to connect the second end of the first serial circuit 130 with the second end of the second serial circuit 132 by wiring, the wiring work becomes easier.

In this embodiment, although a description has been given of the scale 10 including the load cells 40, 42, 44, and 46 that respectively support the four corners of the loading platform 16, the present invention is not limited thereto. For example, as in the following embodiment, the number of the load cell (40, 42, 44, 46) supporting the loading platform 16 on the case base 14 may also be one.

### <Second Embodiment>

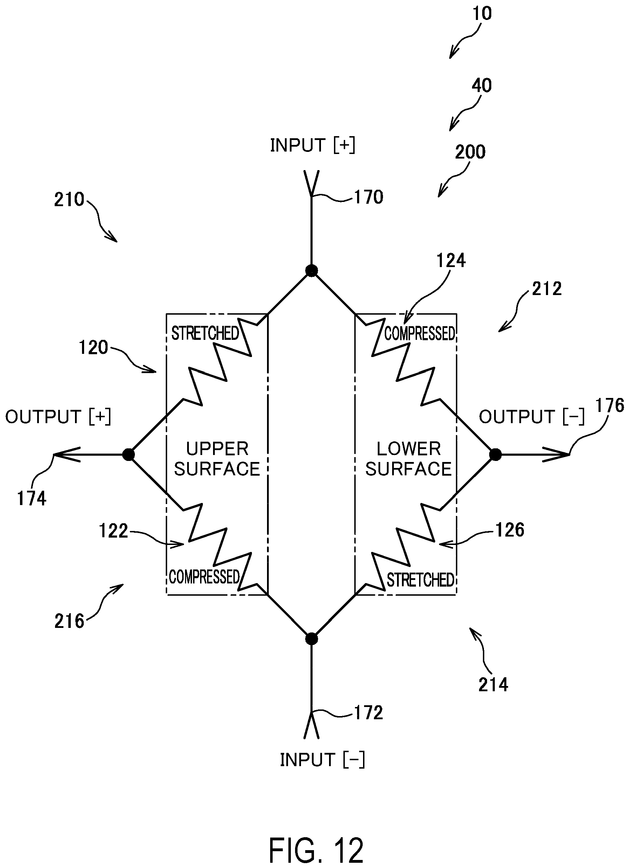

The scale 10 according to a second embodiment differs from that of the first embodiment in that the loading platform 16 is supported on the case base 14 only by the first load cell 40, and a Wheatstone bridge circuit 200 is formed only by the strain sensor 74 of the first load cell 40 (see FIG. 12). For the second embodiment, components that are the same as or similar to those in the first embodiment will be assigned the same reference numerals as those in the first embodiment, and a description thereof shall be omitted. Description will be given of components that are different from those in the first embodiment.

As shown in FIG. 5, the first load cell 40 includes the strain generating body 72. As shown in FIG. 7, the strain generating body 72 has the fixed portion 80 that is supported by the case base 14, the load receiving portion 82 that supports the loading platform 16, and the strain generating part 84 that connects the fixed portion 80 and the load receiving portion 82 and elastically deforms as the load receiving portion 82 is displaced downwardly.

As shown in FIG. 5, the strain generating body 72 is provided with the strain sensor 74. As shown in FIG. 9, the strain sensor 74 is provided with the first strain gauge 120, the second strain gauge 122, the third strain gauge 126, and the fourth strain gauge 124.

In an attached state in which the strain sensor 74 is attached to the strain generating body 72, the first strain gauge 120 is arranged on the part of the upper surface 72A of the strain generating part 84 in the vicinity of the fixed portion 80, and the second strain gauge 122 is arranged on the part of the upper surface 72A of the strain generating part 84 in the vicinity of the load receiving portion 82. In addition, in the attached state, the third strain gauge 126 is arranged on the part of the lower surface 72B of the strain generating part 84 in the vicinity of the load receiving portion 82, and the fourth strain gauge 124 is arranged on the part of the lower surface 72B of the strain generating part 84 in the vicinity of the fixed portion 80.

Thus, the Wheatstone bridge circuit 200 for acquiring the measurement result by the first strain gauge 120, the second strain gauge 122, the fourth strain gauge 124, and the third strain gauge 126 is formed (see FIG. 12).

FIG. 12 is a diagram showing the Wheatstone bridge circuit 200 according to the second embodiment that is formed of each of the strain gauges 120, 122, 124, and 126 of the strain sensor 74. The Wheatstone bridge circuit 200 is formed of each of the strain gauges 120, 122, 126, and 124 of the strain sensor 74 that is provided on the first load cell 40.

The Wheatstone bridge circuit 200 has the first strain gauge 120, the second strain gauge 122, the fourth strain gauge 124, and the third strain gauge 126 on each arm. The first strain gauge 120 and the third strain gauge 126 are respectively arranged on opposing arms 210 and 214. The fourth strain gauge 124 and the second strain gauge 122 are respectively arranged on opposing arms 212 and 216.

Specifically, the first arm 210 of the Wheatstone bridge circuit 200 is formed of the first strain gauge 120 that is arranged on the part of the upper surface 72A of the strain generating part 84 in the vicinity of the fixed portion 80. The first strain gauge 120 is subjected to the tensile force in a state in which the strain generating part 84 is elastically deformed.

The second arm 212 of the Wheatstone bridge circuit 200 is formed of the fourth strain gauge 124 that is arranged on the part of the lower surface 72B of the strain generating part 84 in the vicinity of the fixed portion 80. The fourth strain gauge 124 is subjected to the compressive force in a state in which the strain generating part 84 is elastically deformed.

The third arm 214 of the Wheatstone bridge circuit 200 is formed of the third strain gauge 126 that is arranged on the part of the lower surface 72B of the strain generating part 84 in the vicinity of the load receiving portion 82. The third strain gauge 126 is subjected to the tensile force in a state in which the strain generating part 84 is elastically deformed.

The fourth arm 216 of the Wheatstone bridge circuit 200 is formed of the second strain gauge 122 that is arranged on the part of the lower surface 72B of the strain generating part 84 in the vicinity of the load receiving portion 82. The second strain gauge 122 is subjected to the compressive force in a state in which the strain generating part 84 is elastically deformed.

A junction between the first arm 210 and the fourth arm 216 of the Wheatstone bridge circuit 200 forms the positive output terminal 174 that outputs the positive voltage, and a junction between the second arm 212 and the third arm 214 forms the negative output terminal 176 that outputs the negative voltage. In addition, a junction between the first arm 210 and the second arm 212 forms the positive input terminal 170 that inputs the positive voltage, and a junction between the third arm 214 and the fourth arm 216 forms the negative input terminal 172 that inputs the negative voltage.

### (Operations and Effects)

Next, operational advantages achieved by this embodiment will be described.

The load cell (40) in this embodiment includes with the strain generating body 72 having the strain generating part 84, the strain generating part 84 being configured to connect the fixed portion 80 that is supported by the case base 14 and the load receiving portion 82 that supports the loading platform 16, and the strain generating part 84 being elastically deformed by the displacement of the load receiving portion 82.

In addition, the load cell (40) includes: the first strain gauge 120 arranged on the part of the upper surface 72A of the strain generating part 84 in the vicinity of the fixed portion 80; and the second strain gauge 122 arranged on the part of the upper surface 72A of the strain generating part 84 in the vicinity of the load receiving portion 82. Furthermore, the load cell (40) include: the third strain gauge 126 arranged on the part of the lower surface 72B of the strain generating part 84 in the vicinity of the load receiving portion 82; and the fourth strain gauge 124 arranged on the part of the lower surface 72B of the strain generating part 84 in the vicinity of the fixed portion 80.

As a result, the load cell (40) includes the Wheatstone bridge circuit 200 respectively having the first strain gauge 120, the second strain gauge 122, the fourth strain gauge 124, and the third strain gauge 126 at the arms 210, 212, 214, and 216. In the Wheatstone bridge circuit 200, the first strain gauge 120 and the third strain gauge 126 are arranged on the opposing arms 210 and 214, and the fourth strain gauge 124 and the second strain gauge 122 are arranged on the opposing arms 212 and 216.

In the scale 10 utilizing the load cell (40) having such a configuration, the heat applied from the case base 14 to the fixed portion 80 of the strain generating body 72 is transferred to the load receiving portion 82 via the strain generating part 84. In addition, the heat applied from the loading platform 16 to the load receiving portion 82 of the strain generating body 72 is transferred to the fixed portion 80 via the strain generating part 84. As a result, the temperature gradient is caused in the strain generating part 84 of the strain generating body 72, and the temperature difference is caused between the part of the strain generating part 84 in the vicinity of the fixed portion 80 and the part of the strain generating part 84 in the vicinity of the load receiving portion 82.

On the part of the strain generating part 84 in the vicinity of the fixed portion 80, the first strain gauge 120 is arranged on the upper surface 72A thereof, and the fourth strain gauge 124 is arranged on the lower surface 72B thereof. In addition, at the part of the strain generating part 84 in the vicinity of the load receiving portion 82, the second strain gauge 122 is arranged on the upper surface 72A thereof, and the third strain gauge 126 is arranged on the lower surface 72B thereof.

Here, in a case in which the scale 10 is located at the warmed part, the heat applied from the case base 14 to the fixed portion 80 of the strain generating body 72 is transferred to the load receiving portion 82 via the strain generating part 84. As a result, the temperature of the parts where the first strain gauge 120 and the fourth strain gauge 124 are arranged becomes higher than the temperature of the parts where the second strain gauge 122 and the third strain gauge 126 are arranged.

Therefore, the influence of the heat transferred to the strain generating part 84 on the measurement values of the first strain gauge 120 and the fourth strain gauge 124 is larger than the influence on the measurement values of the second strain gauge 122 and the third strain gauge 126.

The first strain gauge 120, at which the temperature difference caused in the strain generating part 84 has a large influence on the measurement value, is provided on the first arm 210 of the Wheatstone bridge circuit 200. In addition, the third arm 214 that opposes to the first arm 210 is formed of the third strain gauge 126 at which the temperature difference caused in the strain generating part 84 has a small influence on the measurement value.

Therefore, the influence on the output is suppressed by a combination of the first arm 210 that is formed of the first strain gauge 120, which is greatly influenced by the temperature difference, and the third arm 214 that is formed of the third strain gauge 126, which is less influenced by the temperature difference.

In addition, the fourth strain gauge 124, at which the temperature difference caused in the strain generating part 84 has a large influence on the measurement value, is provided on the second arm 212 of the Wheatstone bridge circuit 200. In addition, the fourth arm 216 that opposes to the second arm 212 is formed of the second strain gauge 122, at which the temperature difference caused in the strain generating part 84 has a small influence on the measurement value.

Therefore, the influence on the output is suppressed by a combination of the second arm 212 that is formed of the fourth strain gauge 124, which is greatly influenced by the temperature difference, and the fourth arm 216 that is formed of the second strain gauge 122, which is less influenced by the temperature difference.

As described above, by using the Wheatstone bridge circuit 200 described above, it is possible to suppress the influence of the temperature gradient caused in the strain generating part 84 on the measurement value. Therefore, it is possible to suppress the influence on the measurement results due to the usage conditions.

Also in this embodiment, for the configurations that are the same as or similar to those in the first embodiment, it is possible to achieve operational advantages similar to those in the first embodiment.

Although the embodiments of the present invention have been described in the above, the above-mentioned embodiments merely illustrate a part of application examples of the present invention, and the technical scope of the present invention is not intended to be limited to the specific configurations of the above-described embodiments.

The present application claims priority to Japanese Patent Application No. 2021-032127, filed in the Japan Patent Office on March 1, 2021. The contents of this application are incorporated herein by reference in their entirety.

### Reference Signs List

- 10: scale
- 14: case base
- 16: loading platform
- 40: first load cell
- 42: second load cell
- 44: third load cell
- 46: fourth load cell
- 72: strain generating body
- 72A: upper surface (front surface )
- 72B: lower surface (back surface )
- 74: strain sensor
- 80: fixed portion
- 82: load receiving portion
- 84: strain generating part
- 90A: edge
- 92: downwardly curved part
- 94: upwardly curved part
- 100: first end side
- 102: second end side
- 110: sheet body
- 120: first strain gauge
- 122: second strain gauge
- 124: fourth strain gauge
- 126: third strain gauge
- 130: first serial circuit
- 132: second serial circuit
- 140: first terminal
- 142: second terminal
- 144: third terminal
- 150, 200: Wheatstone bridge circuit
- 210: first arm
- 212: second arm
- 214: third arm
- 216: fourth arm

## Claims

1. A load cell comprising:
a strain generating body having a strain generating part, the strain generating part being configured to connect a fixed portion and a load receiving portion, and the strain generating part being elastically deformed by displacement of the load receiving portion;
a first strain gauge arranged on a part of a front surface of the strain generating part in a vicinity of the fixed portion;
a second strain gauge arranged on a part of the front surface of the strain generating part in a vicinity of the load receiving portion;
a third strain gauge arranged on a part of a back surface of the strain generating part in a vicinity of the load receiving portion;
a fourth strain gauge arranged on a part of the back surface of the strain generating part in a vicinity of the fixed portion;
a first serial circuit in which the first strain gauge and the third strain gauge are connected in series; and
a second serial circuit in which the second strain gauge and the fourth strain gauge are connected in series.

2. The load cell according to claim 1, wherein
in a state in which the strain generating part is elastically deformed,
the first strain gauge is arranged on a front surface of the part deformed in a convex shape, and the fourth strain gauge is arranged on the back surface of the part deformed in the convex shape, and
the second strain gauge is arranged on the front surface of a part deformed in a concave shape, and the third strain gauge is arranged on the back surface of the part deformed in the concave shape.

3. The load cell according to claim 1 or 2, wherein
the first strain gauge, the second strain gauge, the third strain gauge, the fourth strain gauge, the first serial circuit, and the second serial circuit are provided integrally with a strain sensor having a strip-shaped sheet body, and
in a state in which the strain sensor is folded back at an edge of the strain generating body, the first strain gauge and the second strain gauge are arranged on the front surface of the strain generating part, and the third strain gauge and the fourth strain gauge are arranged on the back surface of the strain generating part.

4. The load cell according to claim 3, wherein
the sheet body is formed by including synthetic resin.

5. The load cell according to any one of claims 3 to 4, wherein
the strain sensor is folded back at a part of the strain generating body that is arranged at a position in a vicinity of a periphery of a case to which the strain generating body is attached.

6. The load cell according to any one of claims 1 to 5, wherein
the first strain gauge, the second strain gauge, the third strain gauge, and the fourth strain gauge include a resistance body, the resistance body being configured such that a resistance value is changed in response to expansion and contraction caused by the deformation of the strain generating part.

7. A load cell comprising:
a strain generating body having a strain generating part, the strain generating part being configured to connect a fixed portion and a load receiving portion, and the strain generating part being elastically deformed by displacement of the load receiving portion;
a first strain gauge arranged on a part of a front surface of the strain generating part in a vicinity of the fixed portion;
a second strain gauge arranged on a part of the front surface of the strain generating part in a vicinity of the load receiving portion;
a third strain gauge arranged on a part of a back surface of the strain generating part in a vicinity of the load receiving portion;
a fourth strain gauge arranged on a part of the back surface of the strain generating part in a vicinity of the fixed portion; and
a Wheatstone bridge circuit having the first strain gauge, the second strain gauge, the third strain gauge, and the fourth strain gauge on respective arms, the first strain gauge and the third strain gauge being respectively arranged on opposing arms, and the second strain gauge and the fourth strain gauge being respectively arranged on opposing arms.

8. A scale comprising:
the load cell according to any one of claims 1 to 7;
a case base configured to support the fixed portion of the load cell; and
a loading platform supported by the load receiving portion of the load cell.

9. The scale according to claim 8, wherein
the loading platform has a rectangular shape, and the load cell is arranged at each of four corners of the loading platform.

10. A strain sensor provided on a strain generating body, the strain generating body having a strain generating part, the strain generating part being configured to connect a fixed portion supported by a case base and a load receiving portion supporting a loading platform, and the strain generating part being elastically deformed by displacement of the load receiving portion, the strain sensor comprising:
a strip-shaped sheet body attached to the strain generating part in a state in which the sheet body is folded back at an edge portion of the strain generating body; and strain gauges provided on the sheet body, wherein
the strain gauges include:
a first strain gauge arranged on a part of a front surface of the strain generating part in a vicinity of the fixed portion;
a second strain gauge arranged on a part of the front surface of the strain generating part in a vicinity of the load receiving portion;
a third strain gauge arranged on a part of a back surface of the strain generating part in a vicinity of the load receiving portion; and
a fourth strain gauge arranged on a part of the back surface of the strain generating part in a vicinity of the fixed portion; and wherein
the first strain gauge and the third strain gauge are connected in series in a first serial circuit, and the third strain gauge and the fourth strain gauge are connected in series in a second serial circuit.

11. The strain sensor according to claim 10, wherein
in a state in which the strain generating part is elastically deformed,
the first strain gauge is arranged on the front surface of a part deformed in a convex shape, and the fourth strain gauge is arranged on the back surface of the part deformed in the convex shape, and
the second strain gauge is arranged on the front surface of a part deformed in a concave shape, and the third strain gauge is arranged on the back surface of the part deformed in the concave shape.

12. The strain sensor according to claim 10 or 11, further comprising:
a first terminal connected to a first end of the second serial circuit;
a second terminal connected to a second end of the first serial circuit and a second end of the second serial circuit; and
a third terminal connected to a first end of the first serial circuit.

13. The strain sensor according to any one of claims 10 to 12, wherein
the first strain gauge, the second strain gauge, the third strain gauge, and the fourth strain gauge include a resistance body, the resistance body being configured such that a resistance value is changed in response to expansion and contraction caused by the deformation of the strain generating part.

14. The strain sensor according to any one of claims 11 to 13, wherein
the sheet body is formed by including synthetic resin.
